# EUROPÄISCHE PATENTSCHRIFT

(11) **EP 4 333 611 B1**
(45) Veröffentlichungstag und Bekanntmachung des Hinweises auf die Patenterteilung: **19.11.2025**
(21) Anmeldenummer: 22726032.0
(22) Anmeldetag: 27.04.2022
(51) Int. Cl.: A01K 5/00, B01F 27/922

(54) **MISCHVORRICHTUNG MIT GETEILTER MISCHSCHNECKE UND UNABHÄNGIG VONEINANDER ANTREIBBAREN SCHNECKENWINDUNGSABSCHNITTEN**
MIXING APPARATUS HAVING A DIVIDED MIXING SCREW AND INDEPENDENTLY DRIVABLE SCREW FLIGHT PORTIONS
DISPOSITIF DE MÉLANGE POURVU D'UNE VIS MÉLANGEUSE DIVISÉE ET DES SECTIONS DE SPIRES POUVANT ÊTRE ENTRAÎNÉES INDÉPENDAMMENT LES UNES DES AUTRES

(30) Priorität: 03.05.2021 DE 102021111338
(43) Veröffentlichungstag der Anmeldung: 13.03.2024
(73) Patentinhaber: B. Strautmann & Söhne GmbH u. Co. KG, 49196 Bad Laer (DE)
(72) Erfinder: RADEMACHER, Felix, 49170 Hagen (DE); STRAUTMANN, Wolfgang, 49196 Bad Laer (DE)
(74) Vertreter: Dr. Träger & Strautmann PAe PartG mbB
(86) Internationale Anmeldenummer: PCT/EP2022/061190
(87) Internationale Veröffentlichungsnummer: WO 2022/233675

(56) Entgegenhaltungen:
- DE-A1- 10 345 322
- DE-U1- 202015 001 543
- FR-A1- 2 335 370
- US-A- 3 352 543
- US-A1- 2011 121 114

## Beschreibung

Die Erfindung betrifft eine Mischvorrichtung, insbesondere einen Futtermischer, umfassend
- einen Mischbehälter mit einer Einfüllöffnung und einer Ausgabeöffnung,
- wenigstens ein im Mischbehälter angeordnetes und um eine Drehachse drehbares Mischorgan, beispielsweise eine Mischschnecke oder Haspel,
- eine Antriebsvorrichtung zum Antrieb des Mischorgans.

Solche Mischvorrichtungen sind in vielfältigen Ausführungen als stationäre Anlagen, gezogene Futtermischwagen oder selbstfahrende Futtermischwagen bekannt.

Stationäre Mischvorrichtungen werden insbesondere zur Beschickung von Biogasanlagen mit organischem Material eingesetzt. Futtermischwagen werden insbesondere in landwirtschaftlichen Milchvieh-Betrieben zum Mischen und Verteilen von Silage- und sonstigem Futter verwendet. Hierbei werden die Futterkomponenten entweder durch eine am Futtermischwagen vorgesehene Futter-Entnahmevorrichtung oder durch eine Fremd-Befülleinrichtung aus einem Vorrat, beziehungsweise einem Vorratslager, entnommen und in den Mischbehälter eingefüllt. Das im Mischbehälter befindliche Material wird je nach Ausführung der Mischvorrichtung durch eine oder mehrere horizontal oder vertikal angeordnete Schnecken zu einer homogenen Mischration vermischt und anschließend mittels einer Austrageinrichtung ausgebracht.

Die im Mischbehälter angeordneten Mischschnecken können horizontal oder vertikal angeordnet sein. Bekannt sind Horizontalmischer mit einer oder mehreren horizontal angeordneten Mischschnecken und Vertikalmischer mit einer oder mehreren vertikal angeordneten Mischschnecken, sowie auch sogenannte Paddel- oder Haspelmischer.

Aus FR 2 335 370 A1 ist ein landwirtschaftlicher Anhänger bekannt, der sowohl als Futtermischwagen als auch als Streuwagen zur Ausbringung von Dünger einsetzbar ist. Der Anhänger hat zwei im Bodenbereich angeordnete Mischschnecken 3, die das in den Anhänger eingefüllte Ladegut einer im vorderen Bereich des Anhängers angeordneten Rührvorrichtung zuführen. Die Rührvorrichtung umfasst zwei Rotoren 4, die sich einerseits um sich selbst und andererseits um eine zwischen den beiden Rotoren 4 angeordnete Mittelachse drehen. Die Rotoren 4 bilden eine Fördereinrichtung aus, die das den Rotoren 4 von den Mischschnecken 3 zugeführte Ladegut entweder einer Rückführschnecke 14 oder einer Ausbringöffnung 10 zuführen. Mittels der Rückführschnecke 14 ist das Mischgut in den hinteren Bereich des Anhängers zurückförderbar, so dass es erneut von den Mischschnecken 3 erfasst und nach vorne Richtung Rührvorrichtung gefördert werden kann. Ist ein weiterer Mischkreislauf nicht erforderlich, wird das Ladegut durch die Ausbringöffnung 10 aus dem Anhänger hinaus gefördert.

Aus US 3 352 543 A ist eine Vorrichtung zum Mischen von Flüssigkeiten und Aufschlämmungen bekannt. Die Vorrichtung umfasst ein im Wesentlichen trichterförmiges Gehäuse mit einem darin angeordneten Mischorgan. Das Mischorgan kann mehrere seelenlose Mischwindungen umfassen, welche in das Gehäuse eingebrachte Flüssigkeiten oder Schlämme nach Art eines Quirls durchmischen. Zum Mischen fester Substanzen, insbesondere zum Mischen von Strukturfutter, welches sich beispielsweise im Wesentlichen aus Stroh-, Gras- oder Maisbestandteilen zusammensetzt, ist diese Vorrichtung ungeeignet.

Aus DE 103 45 322 A1 ist ein Futtermischwagen bekannt, der zwei vertikale und unabhängig voneinander antreibbare Mischschnecken umfasst.

Aus DE 20 2015 001 543 U1 ist ein Mischwagen mit einer Vertikalmischschnecke bekannt, welche mit einem Magneten zur Selektion von im Futter enthaltenen Metallteilen ausgestattet ist. Der Magnet ist in einer Aussparung des Schneckengewindes angeordnet. Die Mischschnecke weist einen Abschnitt auf der vor dem Magneten angeordnet ist und einen weiteren Abschnitt im Anschluss an den Magneten. Die Mischschnecke ist somit zwar in zwei Abschnitte unterteilt, die beiden genannten Abschnitte sind jedoch nicht unabhängig voneinander, sondern bilden mit dem Magneten eine einheitliche Mischvorrichtung bzw. eine Mischschnecke mit darin integriertem Magneten aus.

Aus US 2011/121114 A1 ist ein Futtermischwagen mit einer mehrgängigen Mischschnecke bekannt. Das zentrale Schneckenrohr wird gebildet aus einem unteren Teil mit relativ großem Durchmesser und einem oberen Teil mit relativ kleinem Durchmesser. Die Schnecke umfasst eine Welle, die um eine vertikale Welle drehbar ist und die Schnecke im Arbeitseinsatz in Rotation versetzt.

Die bekannten Systeme benötigen eine relativ lange Mischzeit. Eine lange Mischzeit verursacht Kosten und kann die Futterstruktur schädigen. Aufgabe der Erfindung ist es, die beschriebenen Nachteile zu beseitigen, das Mischen effizienter zu gestalten und dabei die Struktur des Futters zu schonen.

Diese Aufgabe wird gelöst durch eine Mischvorrichtung mit den Merkmalen des Anspruchs 1.

Erfindungsgemäß umfasst wenigstens eine Mischschnecke
- eine einfach oder mehrfach geteilte Schneckenwindung mit wenigstens zwei Schneckenwindungsabschnitten und
- eine Antriebsvorrichtung mit einem ersten Einzelantrieb für den ersten Schneckenwindungsabschnitt und einem zweiten Einzelantrieb für den zweiten Schneckenwindungsabschnitt, oder ein Antriebsgetriebe, bei dem sich die Antriebselemente für beide Schneckenabschnitte um dieselbe geometrische Achse drehen,
so dass der erste Schneckenwindungsabschnitt mit einer ersten Drehzahl und der zweite Schneckenwindungsabschnitt mit einer zweiten Drehzahl abhängig oder unabhängig vom jeweils anderen Schneckenwindungsabschnitt gleichlaufend oder gegenläufig antreibbar ist.

Bei den als Stand der Technik bekannten Mischvorrichtungen mit wenigstens einer horizontal oder vertikal angeordneten Mischschnecke ist die Schneckenwindung in der Regel an einem Gehäuse oder einem Zentralrohr angebracht. Im Arbeitseinsatz wird das Gehäuse oder das Zentralrohr in Rotation versetzt und die Mischschnecke dreht sich über ihren gesamten Erstreckungsbereich gleichförmig um ihre Drehachse.

Bei der erfindungsgemäßen Mischvorrichtung ist dagegen wenigstens eine Mischschnecke in wenigstens zwei Schneckenwindungsabschnitte unterteilt und umfasst eine Antriebsvorrichtung mit einem ersten Einzelantrieb für den ersten Schneckenwindungsabschnitt und einem zweiten Einzelantrieb für den zweiten Schneckenwindungsabschnitt oder ein Antriebsgetriebe, bei dem sich die Antriebselemente für beide Schneckenwindungsabschnitte um dieselbe geometrische Achse drehen. Somit kann das zu mischende Material in unterschiedlichen Bereichen der Mischschnecke mit unterschiedlicher Intensität vermischt werden. Hierdurch lässt sich der Mischvorgang an unterschiedliche Mischgüter und an unterschiedliche Phasen des Mischprozesses anpassen.

Bei einer vertikal angeordneten Mischschnecke kann beispielsweise der untere Schneckenwindungsabschnitt mit einer kleineren Drehzahl und der obere Schneckenwindungsabschnitt mit einer größeren Drehzahl antreibbar sein. Hierdurch sind der Kraftbedarf und die Mischintensität der beiden Schneckenwindungsabschnitte individuell einstellbar. Der Gesamt-Kraftbedarf und die Gesamt-Mischintensität kann hierdurch optimiert werden. Da Kraftbedarf und Mischintensität der Mischschnecke u.a. von deren Drehzahl abhängig sind, kann bei der genannten Vertikalschnecke beispielsweise im unteren Bereich eine im Vergleich zum oberen Bereich kleinere Drehzahl vorgewählt werden, um gezielt in diesem Bereich den Kraftbedarf zu reduzieren. Im oberen Bereich kann eine größere Drehzahl gewählt werden, um dort gezielt die Mischintensität zu erhöhen.

Im Ergebnis ermöglicht somit die Unterteilung der Mischschnecke in einzeln antreibbare Schneckenwindungsabschnitte bei vertikalen Mischschnecken eine Anpassung der Mischschnecke insgesamt an die jeweils vorliegenden Bedürfnisse und Einsatzbedingungen.

In einer ersten Ausführungsform kann der erste Schneckenwindungsabschnitt und der zweite Schneckenwindungsabschnitt gleichläufig im Uhrzeigersinn oder gegen den Uhrzeigersinn antreibbar sein.

Mit einem gleichläufigen Antrieb kann die Funktion und Wirkungsweise einer aus dem Stand der Technik bekannten Vertikalschnecke realisiert werden. Dies geschieht, indem die beiden Schneckenwindungsabschnitte in eine Stellung gebracht werden, die der Stellung einer einteiligen Stand der Technik-Mischschnecke entspricht. Hierzu wird bei einer geteilten Vertikalschnecke das obere Ende des ersten (unteren) Schneckenwindungsabschnittes in eine Position gebracht, die an das untere Ende des zweiten (oberen) Schneckenwindungsabschnittes angrenzt. Hierdurch ergibt sich ein widerstandsarmer Übergang vom einen Schneckenwindungsabschnitt zum anderen. Werden beide Schneckenwindungsabschnitte in dieser Stellung mit derselben Drehzahl angetrieben, wird das Mischgut analog zu einer Stand-der-Technik Mischschnecke mit durchgehender Schneckenwindung durch die aneinander angrenzenden Schneckenwindungsabschnitte von unten nach oben gefördert. Im Gegensatz zu den bekannten Stand-der-Technik-Mischschnecken ist es jedoch bei der erfindungsgemäßen Mischschnecke möglich, die beiden Schneckenwindungsabschnitte gleichläufig, aber mit unterschiedlicher Drehzahl beziehungsweise Geschwindigkeit anzutreiben. Hierdurch können der Mischeffekt und der Leistungsbedarf anforderungsgerecht variiert werden.

Alternativ zu einem gleichläufigen Antrieb kann auch ein gegenläufiger Antrieb vorgesehen sein. Bei einem solchen Antrieb wird somit der eine Schneckenwindungsabschnitt im Uhrzeigersinn und der andere Schneckenwindungsabschnitt entgegengesetzt zum Uhrzeigersinn gedreht. Eine Mischvorrichtung mit entgegengesetzt antreibbaren Schneckenwindungsabschnitten hat eine besonders intensive Mischwirkung und ist deshalb besonders gut für Einsatzfälle geeignet, bei denen eine kurze Mischzeit realisiert werden soll. Wichtig ist hierbei auch, dass dadurch, dass die Mischdrehung entgegengesetzt ist, insbesondere im "Kollisionsbereich" des Mischgutes eine sehr intensive (fast Zwangsvermischung) zu erwarten ist.

In einer besonderen Ausführungsform kann die Drehzahl des ersten und/oder die Drehzahl des zweiten Schneckenwindungsabschnitts verstellbar sein. Die Verstellung kann beispielsweise mittels eines zusätzlichen, vorzugsweise stufenlos verstellbaren, Getriebes realisiert werden. Die Drehzahleinstellung ermöglicht eine Anpassung der Drehzahl während eines Mischvorganges. So kann beispielsweise in der Anfangsphase eines Mischprozesses bei noch weitgehend ungeschnittenem Mischgut eine kleinere Drehzahl für einen oder beide Schneckenwindungsabschnitte vorgewählt werden, um hierdurch den Kraftbedarf zu reduzieren. Bei bereits geschnittenem Mischgut und/oder bei der Ausbringung des Mischgutes kann eine größere oder größer werdende Drehzahl gewählt werden, um den Misch- oder Ausbringprozess zu beschleunigen.

Eine variierbare Drehzahl kann auch dazu dienen den Mischprozess an variable Randbedingungen anzupassen. Bei den variablen Randbedingungen kann es sich beispielsweise um das momentane Gewicht des Mischgutes, den momentanen Kraftbedarf oder den momentanen Befüllgrad des Mischbehälters handeln. Diese momentanen Randbedingungen lassen sich mittels geeigneter Sensoren messen. Beispielsweise kann das Gewicht des im Mischbehälter befindlichen Mischgutes mit bekannten Wiegesensoren gemessen, der Leistungsbedarf der Antriebsorgane mittels einer Drehmomentbestimmung im Antriebsstrang oder der Befüllgrad des Mischbehälters mit optischen Sensoren (Kamera, Lichtschranke) bestimmt werden. Auf Basis der gemessenen Sensordaten kann dann die Drehzahl eines oder beider Schneckenwindungsabschnitte bedarfsgerecht angepasst werden.

Die Mischschnecke kann ein rohrartiges Gehäuse mit einem ersten Gehäuseabschnitt und einem zweiten Gehäuseabschnitt umfassen, wobei
- der erste Schneckenwindungsabschnitt auf dem ersten Gehäuseabschnitt und der zweite Schneckenwindungsabschnitt auf dem zweiten Gehäuseabschnitt angebracht ist und
- wenigstens ein Einzelantrieb innerhalb des Gehäuses angeordnet ist.

Innerhalb des rohrartigen Gehäuses, das in seinem Anfangsabschnitt kegelförmig ausgebildet sein kann, sind die Antriebseinrichtung und deren Einzelantriebe zum einen gut geschützt gegen Beschädigungen und zum anderen platzsparend untergebracht. Bei einer erfindungsgemäßen Vertikalschnecke mit einem kegelstumpfartigen Gehäuse im Innenbereich des unteren Schneckenwindungsabschnittes kann die Antriebsvorrichtung somit vorzugsweise ganz oder teilweise innerhalb des genannten Kegelstumpf-Gehäuses untergebracht sein.

Die Antriebsvorrichtung der Mischvorrichtung umfasst vorzugsweise ein Planetengetriebe. Planetengetriebe, auch Umlaufrädergetriebe genannt, sind Zahnrad- oder Reibradgetriebe, die neben gestellfesten Wellen auch Achsen besitzen, die auf Kreisbahnen im Gestell umlaufen. Dementsprechend wird zwischen den auf den gestellfesten Achsen gelagerten Zentral- oder Sonnenrädern und den auf den umlaufenden Achsen gelagerten Umlauf- oder Planetenrädern unterschieden. Die auf den umlaufenden Achsen drehenden Räder umkreisen ein zentrales Rad ähnlich wie Planeten die Sonne. Der Steg, der die umlaufenden Achsen trägt, dreht seinerseits um eine gestellfeste Achse.

Der Einsatz eines Planetengetriebes an der erfindungsgemäßen Mischvorrichtung hat insbesondere folgende Vorteile:
- Die Bauweise ist klein und kompakt und weist ein geringes Gewicht und eine günstige Raumleistung im Verhältnis zum Nennmoment auf.
- Durch kleine Schwungmassen sowie geringe Wälz- und Gleitgeschwindigkeiten an den Zahnflanken werden hohe Wirkungsgrade realisiert.
- Ein Planetengetriebe hat hohe Überlastreserven, was insbesondere beim Anlauf des Mischbetriebes vorteilhaft ist.
- Die Lage der An- und Abtriebswellen ist koaxial. Es besteht die Möglichkeit der Drehrichtungsumkehr.

In einer bevorzugten Ausführungsform umfasst das Planetengetriebe einen Steg, ein Hohlrad und ein Sonnenrad, wobei entweder der Steg oder das Hohlrad oder das Sonnenrad fixiert ist und die beiden nicht fixierten Einheiten jeweils einen Einzelantrieb für den ersten und den zweiten Schneckenwindungsabschnitt ausbilden. Das Planetengetriebe arbeitet somit im Zweiwellenbetrieb. Damit ist das Getriebe zwangläufig und hat einen Laufgrad von F=1.

In einer bevorzugten Ausführungsform sind die Schneckenwindungsabschnitte durch eine Trennebene voneinander getrennt, wobei der erste Schneckenwindungsabschnitt auf einer ersten Seite der Trennebene und der zweite Schneckenwindungsabschnitt auf der zweiten Seite der Trennebene angeordnet ist. Hierdurch werden Kollisionen der Schneckenwindungsabschnitte auch dann ausgeschlossen, wenn die beiden Schneckenwindungsabschnitte mit unterschiedlicher Drehzahl beziehungsweise unterschiedlicher Geschwindigkeit angetrieben werden.

Vorzugsweise ist die zwischen den Schneckenwindungsabschnitten befindliche Trennebene in einem Winkel von 90° zur Drehachse der Mischschnecke angeordnet. Hierdurch ergibt sich ein einfacher Aufbau der Schneckenwindungsabschnitte und eine besonders kostengünstige Herstellung. Die Trennung in einer Stellung 90° zur Drehachse ist wegen der über die gesamte Länge des Begegnungsbereiches notwendigen exakten Einstellung einfach einzustellen bzw. nachzujustieren.

Bei einer Vertikalschnecke kann bei einer alternativen Ausführung an Stelle eines 90°-Winkels zur Rotationsachse auch eine Neigung der Trennebene vorgesehen sein. Beispielsweise wird durch eine Neigung eines Schneckenwindungsabschnittes zur Rotationsachse die zentrische Förderwirkung verstärkt. Bei einer Vertikalschnecke mit nach innen geneigten Schneckenwindungsabschnitten fällt bei Rotation der Trommel somit weniger Material von der Mischschnecke.

Die Einzelantriebe der Schneckenwindungsabschnitte können gemeinsam auf einer Seite der Trennebene angebracht sein. Das hat den Vorteil, dass sich auf der anderen Seite der Trennebene entsprechende Freiräume ergeben. Bei einer Vertikalschnecke ergibt sich hierdurch ein frei zugänglicher Raum oberhalb der Mischschnecke und eine einfache Befüllung des Mischraumes von oben.

Alternativ dazu ist es aber auch möglich, dass der Einzelantrieb des ersten Schneckenwindungsabschnitts auf der ersten Seite der Trennebene und der Einzelantrieb des zweiten Schneckenwindungsabschnitts auf der zweiten Seite der Trennebene angeordnet ist. Hierdurch lässt sich die Mischschnecke von beiden Seiten gleichermaßen gut abstützen.

In einer bevorzugten Ausführung weist der erste und/oder der zweite Schneckenwindungsabschnitt einen von der zweiten Seite an die Trennebene heranreichenden Endabschnitt auf. Am Endabschnitt kann eine Schneidkante oder ein nicht schneidender Bereich mit stumpfen Elementen vorgesehen sein. Die stumpfen Elemente können einen Übergangsbereich bilden, der als Linienberührung (parallel) oder Punktberührung (V-förmig) ausgeführt sein kann. Ein besonders geeigneter Anwendungsfall wäre z.B. die Zubereitung rieselfähiger Mischrationen, bei denen keine Schneidwerkzeuge benötigt werden.

Alternativ zu einem nicht schneidenden Endabschnitt kann an wenigstens einem Schneckenwindungsabschnitt eine Schneidkante vorgesehen sein, um Mischgut zu schneiden. Vorzugsweise hat jedoch nicht nur ein Schneckenwindungsabschnitt eine Schneidkante, sondern beide Schneckenwindungsabschnitte haben eine Schneidkante. Die beiden Schneidkanten bilden zueinander Gegenschneiden aus, mittels derer sich das Mischgut widerstandsarm schneiden lässt.

Die Schneidkanten können so angeordnet sein, dass sie einander bei Rotation der Schneckenwindungsabschnitte mit unterschiedlichen Drehzahlen im Moment ihres Zusammentreffens kontaktieren. Der Kontakt kann linear oder nichtlinear, beispielsweise wellenförmig, sein. Ein nichtlinearer Kontakt ist weniger kraftaufwendig und reduziert somit den Antriebsbedarf.

Weiterhin können die Schneidkanten in ihrer Höhe und/oder in ihrer Ausrichtung einstellbar sein. Um die Einstellbarkeit zu realisieren kann beispielsweise eine Schraubverbindung vorgesehen sein, wobei für die Schrauben Langlöcher vorgesehen sind.

Vorzugsweise bilden die Schneidkanten im Moment ihres Zusammentreffens eine V-förmige Formation aus. Bei Fortsetzen der Rotationsbewegung wird zwischen den Schneidkanten befindliches Material somit durch einen Scherschnitt getrennt. Hierdurch werden Leistungsspitzen vermieden und es ergibt sich im Bereich der Schneidkanten ein glatter, die innere Struktur des Mischgutes schonender Schnitt. Vereinfacht gesagt wird das Mischgut durch einen ziehenden, scherenartigen Schnitt zerteilt und dabei nicht zerrissen oder zermust.

Eine oder beide Schneidkanten können linear ausgebildet sein. Sind beide Schneidkanten linear ausgebildet, ist der Schneidwinkel zwischen den Schneidkanten über deren gesamten Verlauf gleich. Durch beidseitig lineare Schneidkanten bleibt neben dem Schnittwinkel auch die Schneidkraft konstant.

Gegenüberliegend zur Schneidkante kann eine Schwungmasse vorgesehen sein. Mittels einer solchen Schwungmasse, wie sie beispielsweise vom System Kurbelwelle/Schwungrad bei einem Motor bekannt ist, kann die Reaktionskraft besser/kompakter ausgeglichen werden.

Weiterhin ist es möglich, dass eine oder beide Schneidkanten eine gekrümmte, säbelartige Kontur aufweisen. Durch die säbelartige Kontur wird der Effekt des ziehenden Schnittes zwischen Schneide und Gegenschneide verstärkt. Eine säbelförmige Schneidkante hat weiterhin den Vorteil, dass die Reaktionskraft auf einen größeren Bereich (Drehwinkel) und somit besser auf die Mischschnecke verteilt wird. Dadurch wird das Drehmoment gleichförmiger und der Antriebsstrang wird geschont.

Zudem ist eine gekrümmte Schneide grundsätzlich länger als eine gerade Schneide, so dass durch Einsatz einer längeren Schneide die Schneidarbeit besser auf die gesamte Schneidkante verteilt werden kann.

Bei gegenläufiger Rotation findet an der Schneidkante durch den säbelförmigen Übergang im Überlappungsbereich nur eine Punktberührung (unten/innen startend, oben/außen enden) statt. Eine Blockade durch verstopfendes Material wird verringert, weil sich der Materialfluss teilen kann. Dadurch reduziert sich auch die Gefahr, dass das Mischgut verpresst und/oder vermust wird. Dies ist insbesondere dann wichtig, wenn es sich bei dem Mischgut um Futter für Rindvieh beziehungsweise Wiederkäuer handelt. Der Erhalt der Futter-Struktur fördert den Stoffwechsel und die Gesundheit dieser Tiere.

In einer weiteren Ausführung kann an wenigstens einen der Schneckenwindungsabschnitte eine die Trennebene durchbrechende Verlängerung angeschlossen sein. Hierdurch wird in axialer Schneckenrichtung zwischen den Schneckenwindungsabschnitten ein Überlappungsbereich ausgebildet. Der Überlappungsabschnitt ist somit ein Raum in axialer Schneckenrichtung, in dem beide Schneckenwindungsabschnitte wirken. Um eine Kollision der Schneckenwindungsabschnitte bei unterschiedlichen Drehzahlen zu vermeiden kann vorgesehen sein, dass das Ende des einen Schneckenwindungsabschnittes in radialer Richtung gesehen in einem Innenbereich und das Ende des anderen Schneckenwindungsabschnittes radial gesehen in einem Außenbereich aktiv ist. Die die Trennebene zwischen den Schneckenwindungsabschnitten durchbrechende Verlängerung windet sich dann seelenlos, beziehungsweise korkenzieherartig, um einen inneren Bereich des anderen Schneckenwindungsabschnittes herum.

Alternativ hierzu ist es auch möglich, dass die genannte Verlängerung des einen Schneckenwindungsabschnittes den anderen Schneckenwindungsabschnitt zwar radial nicht überragt, bei der Rotationsbewegung jedoch durch eine entsprechende Aussparung des anderen Schneckenwindungsabschnittes hindurchgeführt wird, um auf diese Art eine Kollision zu vermeiden.

Unabhängig davon, wie der Kollisionsgefahr begegnet wird, ergibt sich durch den Überlappungsbereich der beiden Schneckenwindungsabschnitte ein intensivierter Mischeffekt. Dies ist in der Regel insbesondere dann der Fall, wenn der untere Schneckenwindungsabschnitt mit größerem Wirkdurchmesser, also der untere äußere Schneckenteil, eine nach innen, zur zentralen Drehachse der Schnecke hinweisende (geringfügige) Steigung aufweist und der Schneckenwindungsabschnitt des inneren Schneckenteiles eine (auch nur geringfügig) nach außen weisende Steigung aufweist.

Um die Zerkleinerung des Mischgutes zu forcieren, können an einem oder beiden Schneckenwindungsabschnitten ein oder mehrere Schneidwerkzeuge angebracht sein. Die Schneidwerkzeuge, beispielsweise Schneidklingen, können als Freischnittwerkzeuge arbeiten. Vorzugsweise arbeiten die Schneidwerkzeuge jedoch zusammen mit Gegenschneiden, die am jeweils anderen Schneckenwindungsabschnitt angebracht sind. Bei Rotation der Schneckenwindungsabschnitte werden die Schneidwerkzeuge an den Gegenschneiden vorbeigeführt. Hierdurch ergibt sich ein scherender Schnitt, der das zwischen Schneidwerkzeug und Gegenschneide befindliche Material zertrennt.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt einen Futtermischwagen mit zwei Vertikalschnecken in einer perspektivischen Seitenansicht;
- Fig. 2: zeigt einen Futtermischwagen mit Futterentnahme-Vorrichtung in mit einer Seitenansicht mit einer angedeuteter Horizontalschnecke;
- Fig. 3: zeigt eine Vertikalschnecke in einer ersten Ausführungsform mit gleichläufigem Antrieb und einem linearen Übergang zwischen den Schneckenwindungsabschnitten in einer perspektivischen Ansicht;
- Fig. 4: zeigt die Vertikalschnecke gemäß Fig. 3 in einer Seitenansicht;
- Fig. 5: zeigt die Vertikalschnecke gemäß der Figuren 3 und 4 in einer geschnittenen Seitenansicht;
- Fig. 6: zeigt eine Vertikalschnecke in einer zweiten Ausführungsform mit gegenläufigem Antrieb und einem linearen Übergang zwischen den Schneckenwindungsabschnitten in einer perspektivischen Ansicht;
- Fig. 7: zeigt die Vertikalschnecke gemäß Fig. 6 in einer Seitenansicht;
- Fig. 8: zeigt die Vertikalschnecke gemäß der Figuren 6 und 7 in einer geschnittenen Seitenansicht;
- Fig. 9: zeigt eine Vertikalschnecke in einer dritten Ausführungsform mit gleichläufigem Antrieb und gekrümmtem Übergang zwischen den Schneckenwindungsabschnitten in einer perspektivischen Ansicht;
- Fig. 10: zeigt die Vertikalschnecke gemäß Fig. 9 in einer Seitenansicht;
- Fig. 11: zeigt eine Vertikalschnecke in einer vierten Ausführungsform mit gegenläufigem Antrieb und einem Überlappungsbereich zwischen den Schneckenwindungsabschnitten in einer perspektivischen Ansicht;
- Fig. 12: zeigt die Vertikalschnecke gemäß Fig. 11 in einer ersten Seitenansicht;
- Fig. 13: zeigt die Vertikalschnecke gemäß Fig. 11 in einer zweiten Seitenansicht;
- Fig. 14: zeigt eine Vertikalschnecke in einer fünften Ausführungsform mit gegenläufigem Antrieb und zusätzlichen Schneidwerkzeugen auf den Schneckenwindungsabschnitten in einer perspektivischen Ansicht;
- Fig. 15: zeigt die Vertikalschnecke gemäß Fig. 14 in einer ersten Seitenansicht;
- Fig. 16: zeigt die Vertikalschnecke gemäß Fig. 14 in einer zweiten Seitenansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten der Mischvorrichtung im Betriebsmodus.

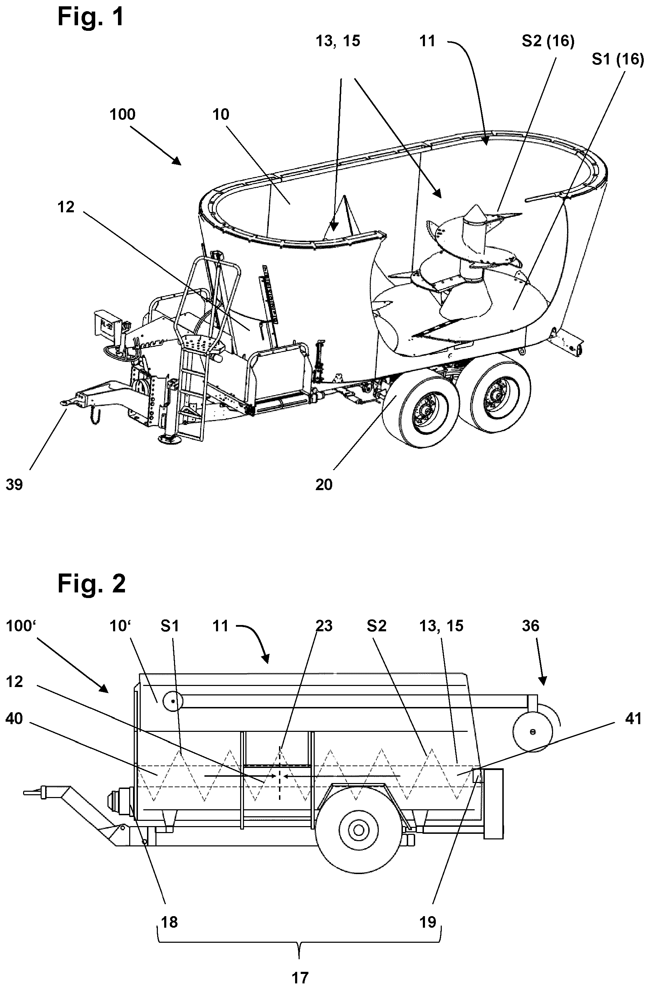

Figur 1 zeigt eine Mischvorrichtung 100 in Form eines Futtermischwagens mit einem Mischbehälter 10 und einem darin angeordneten Mischorgan 13 in Form von zwei vertikalen Mischschnecken 15. Der Futtermischwagen hat ein Fahrwerk 20 und ist mit einer Anhängevorrichtung 39 an eine Zugmaschine, beispielsweise einen Traktor (nicht dargestellt) koppelbar. Der Mischbehälter 10 ist nach oben hin offen, so dass zu mischende Futterkomponenten durch eine so gebildete Einfüllöffnung 11 von oben in den Mischbehälter 10 einfüllbar sind. In den Mischbehälter 10 eingebrachte Futterkomponenten werden von den Mischschnecken 15 zu einer homogenen Futtermasse vermischt und sind im Anschluss daran durch eine Ausgabeöffnung 12 ausbringbar.

Die Wand des Mischbehälters 10 ist unterbrochen dargestellt, so dass von den beiden im dargestellten Ausführungsbeispiel gleich konfigurierten Mischschnecken 15 die in Fahrtrichtung des Futtermischwagens gesehen hintere Mischschnecken 15 gut zu erkennen ist.

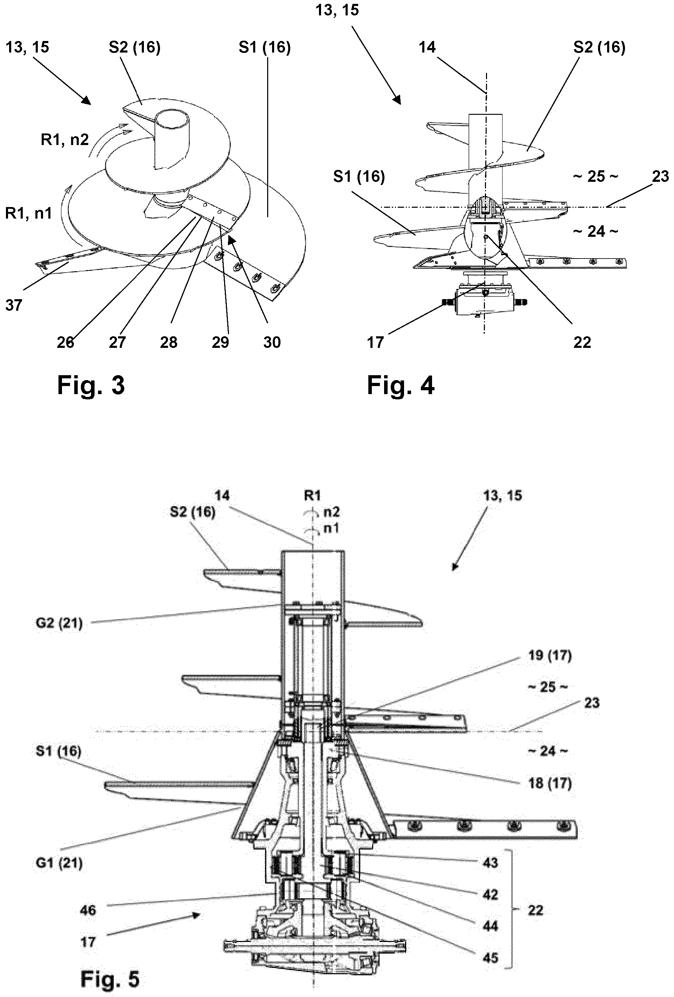

Beide Mischschnecke 15 weisen eine Schneckenwindung 16 mit einem unteren Schneckenwindungsabschnitt S1 und einem gegenläufig dazu angeordneten oberen Schneckenwindungsabschnitt S2 auf. Die beiden Schneckenwindungsabschnitte S1 und S2 sind mittels einer Antriebsvorrichtung 17 mit zwei Einzelantrieben 18 und 19 unabhängig voneinander antreibbar. Dieser Schneckenaufbau entspricht dem in den Figuren 4 bis 6 dargestellten Aufbau und ist im Zusammenhang mit der Erläuterung der Figuren 4 bis 6 näher beschrieben. Zusätzlich zu der Schneckenwindung 16 kann im unteren Bereich der Mischschnecke 15 ein Räumarm 37 (vgl. Fig. 3) vorgesehen sein, um bei der Futterausgabe durch die Ausgabeöffnung 12 die Restgutentleerung zu beschleunigen. Durch die unabhängig und auch mit unterschiedlichen Drehzahlen n1 und n2 antreibbaren Schneckenwindungsabschnitte S1 und S2 wird eine intensive und schnelle Durchmischung der Futterkomponenten erreicht.

Fig. 2 zeigt eine Mischvorrichtung 100' in Form eines Futtermischwagens mit einem Mischbehälter 10 und einem darin angeordneten Mischorgan 13 in Form einer horizontalen Mischschnecke 15. Die Befüllung des Futtermischwagens erfolgt entweder mit einer Futter-Entnahmevorrichtung 36 oder durch eine an der Oberseite des Mischbehälters 10' vorgesehene Entnahmeöffnung 11. Die Mischschnecke 15 umfasst ein vorderes Schneckenrohr 40 mit einer darauf angeordneten Schneckenwindung S1 sowie ein hinteres Schneckenrohr 41 mit einer darauf angeordneten Schneckenwindung S2.

Die in Figur 2 dargestellte Ausführungsform der Mischvorrichtung 100' ist beispielhaft zu verstehen und wird mit diesem Schutzrecht nicht beansprucht.

Die Figuren 3, 4 und 5 zeigen eine Vertikalschnecke 15 in einer ersten Ausführungsform mit gleichläufigem Antrieb und einem linearen Übergang zwischen den Schneckenwindungsabschnitten S1 und S2. Der untere Schneckenwindungsabschnitt S1 dreht ebenso wie der obere Schneckenwindungsabschnitt S2 in eine Drehrichtung R1 im Uhrzeigersinn. Beide Schneckenwindungsabschnitte S1 und S2 fördern das Mischgut bei Rotation in Drehrichtung R1 nach oben.

Um zu veranschaulichen, dass die Drehzahlen n1 und n2 unterschiedlich sein können, sind im Bereich der Drehzahl n2 zwei Pfeile eingezeichnet, während im Bereich der Drehzahl n1 nur ein Pfeil eingezeichnet ist. Der Schneckenwindungsabschnitt S1 befindet sich vollständig auf einer ersten Seite 24 der Trennebene 23, während der Schneckenwindungsabschnitt S2 sich vollständig auf einer zweiten Seite 25 der Trennebene 23 befindet. Kollisionen der Schneckenwindungsabschnitt S1 und S2 bei Rotation mit unterschiedlichen Drehzahlen n1, n2 sind somit ausgeschlossen.

Die untere Schneckenwindung S1 umfasst an ihrer Oberseite einen Endabschnitt 26 mit einer im dargestellten Ausführungsbeispiel linearen Schneidkante 27. Die obere Schneckenwindung S2 umfasst an ihrer Unterseite einen Endabschnitte 28 mit einer im dargestellten Ausführungsbeispiel linearen Schneidkante 29. Die Schneidkanten 27 und 29 sind im dargestellten Ausführungsbeispiel zueinander einstellbar. Hierdurch lässt sich der Schneidspalt zwischen den Schneidkanten und auch die Ausrichtung der Schneidkanten justieren. Im dargestellten Ausführungsbeispiel sind die Schneidkanten 27 und 29 so zueinander eingestellt, dass sich beim einander Überstreichen der Schneidkanten 27 und 29 eine V-förmige Formation 30 ergibt. Zwischen den Schneidkanten befindliches Material wird somit widerstandsarm geschnitten.

Der Antrieb der Schneckenwindungsabschnitte S1 und S2 erfolgt mittels einer von unten teilweise in ein Gehäuse 21 hereinragenden Antriebsvorrichtung 17. Das Gehäuse 21 umfasst zwei voneinander getrennte Gehäuseabschnitte G1 und G2. Auf dem im dargestellten Ausführungsbeispiel kegelförmig ausgeführten Gehäuseabschnitt G1 ist der Schneckenwindungsabschnitt S1 angebracht, auf dem Gehäuseabschnitt G2 der Schneckenwindungsabschnitt S2. Die Antriebsvorrichtung 17 umfasst ein Planetengetriebe 22 mit einem Sonnenrad 42, auf Planetenträgern 43 gelagerten Planetenrädern 44 und einem Hohlrad 45. Die in Fig. 5 dargestellten Ausführungsform realisiert einen gleichläufigen Antrieb der Schneckenwindungsabschnitte S1 und S2, indem die Planetenträger 43 an den unteren Gehäuseabschnitt G1 gekoppelt sind und das Sonnenrad 42 an den oberen Gehäuseabschnitt G2 gekoppelt ist. Die Drehzahlen n1 und n2 lassen sich in einer einfachen Ausführungsform durch die Bauart des Planetengetriebes vordefinieren. Im dargestellten Ausführungsbeispiel umfasst das Planetengetriebe 22 ein weiteres Hohlrad 46. Hierdurch ergibt sich eine Überlagerungsfunktion, bei der das Hohlrad 46 der ersten Planetenstufe keine feste Einheit mit dem Grundkörper bildet, sondern mit einer Korrektur-Schneckenwelle oder über eine Außenverzahnung, verzahnt ist. Durch Drehung dieser Schnecke bzw. über einen Ritzelantrieb (zum Beispiel mittels eines Hydraulikmotors), dreht sich das Hohlrad des Planetengetriebes und die Abtriebsgeschwindigkeit ändert sich. Überlagerungsgetriebe sind die ideale Lösung für die Synchronisation der Bearbeitungsphasen beim Mischen von Futtermitteln. Grundsätzlich käme weiterhin in Betracht, eine weitere Überlagerungsfunktion an der zweiten Planetenstufe vorzusehen. Bei einer solchen Ausführungsform sind die Drehzahlen n1 und n2 unabhängig voneinander einstellbar.

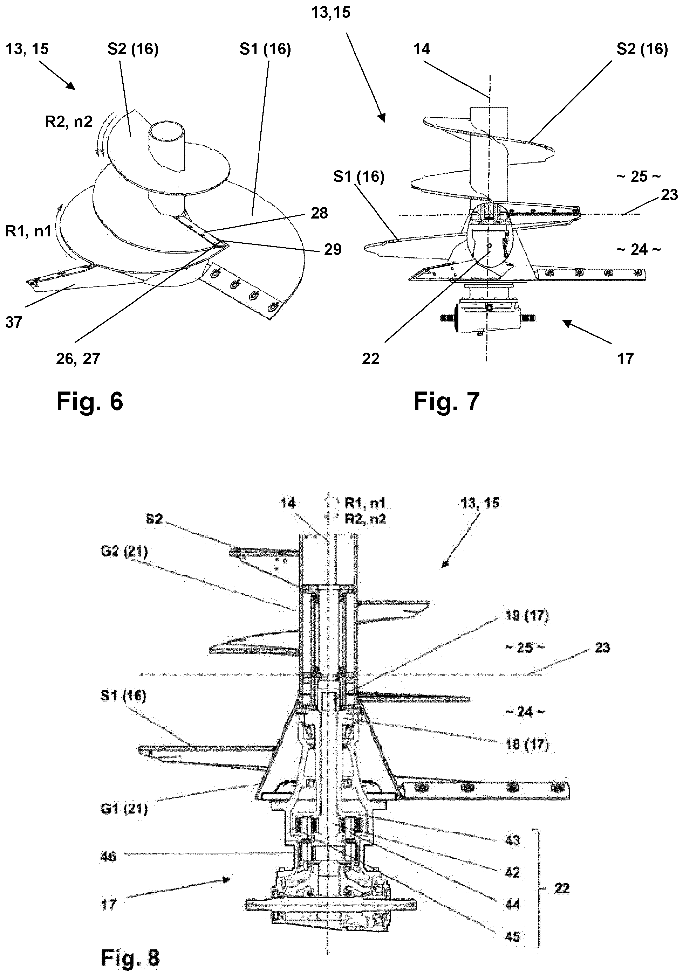

Die Figuren 6, 7 und 8 zeigen eine Vertikalschnecke 15 in einer zweiten Ausführungsform mit gegenläufigem Antrieb und einem linearen Übergang zwischen den Schneckenwindungsabschnitten S1 und S2. Der untere Schneckenwindungsabschnitt S1 dreht in Drehrichtung R1, der obere Schneckenwindungsabschnitt S2 dreht entgegengesetzt zum Uhrzeigersinn in eine Drehrichtung R2. Die Schneckenwindungsabschnitte S1 und S2 sind so konfiguriert, dass sie das Mischgut trotz unterschiedlicher Drehrichtungen R1 und R2 nach oben fördern.

Analog zur ersten Ausführungsform gemäß der Figuren 3 bis 5 umfasst auch die zweite Ausführungsform gemäß der Figuren 6 bis 8 eine Antriebsvorrichtung 17 mit einem Planetengetriebe 22. Im Gegensatz zur ersten Ausführungsform wird bei der zweiten Ausführungsform jedoch ein gegenläufiger Antrieb der Schneckenwindungsabschnitte S1 und S2 realisiert. Hierzu erfolgt der Antrieb des unteren Gehäuseabschnittes G1 - und damit auch der Antrieb des Schneckenwindungsabschnittes S1 - über das Hohlrad 45. Der obere Gehäuseabschnitt G2 - und damit auch der Antrieb des Schneckenwindungsabschnittes S2 - erfolgt wie bei der ersten Ausführungsform über das Sonnenrad 42. Auch bei der zweiten Ausführungsform sind die Drehzahlen n1 und n2 variabel und kann beispielsweise auf die weiter oben bereits beschriebene Art realisiert werden.

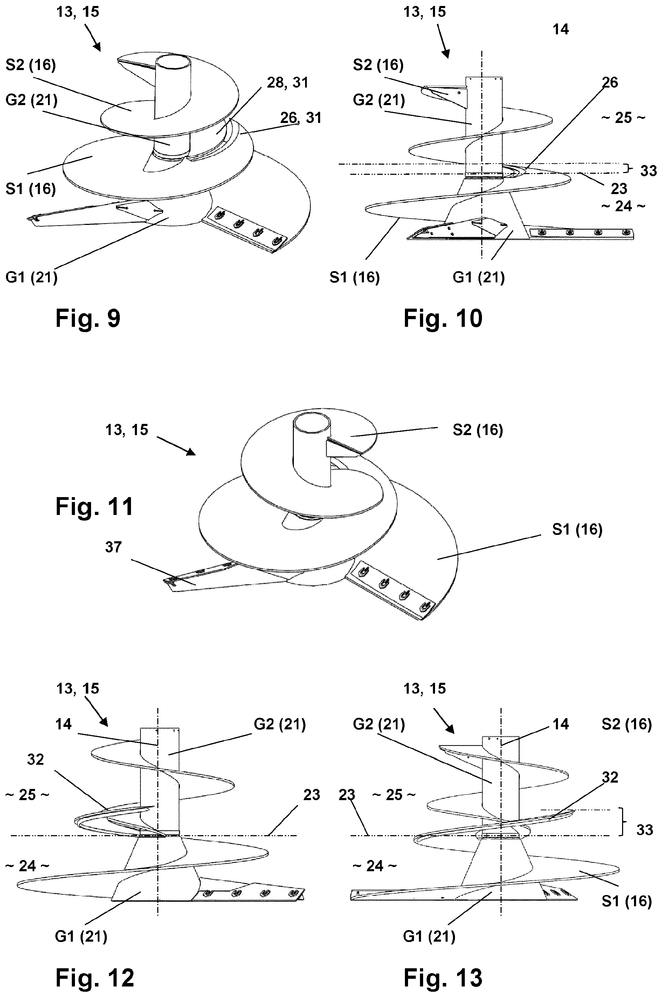

Die Figuren 9 und 10 zeigen eine vertikale Mischschnecke 15 in einer dritten Ausführungsform mit einem gleichläufigen Antrieb. Die Endabschnitte 26 und 28 der Schneckenwindungsabschnitte S1 und S2 weisen jeweils eine säbelartig gekrümmte Kontur 31 auf. Der äußere Bereich des Schneckenwindungsabschnitts S1 ist seelenlos und überragt die Trennebene 23 ein Stück weit in den Bereich der zweiten Seite 25. Hierdurch ergibt sich eine Überlappung zwischen den Schneckenwindungsbereichen S1 und S2, deren Wirkung im Zusammenhang mit der Beschreibung der Figuren 11 bis 13 näher erläutert ist.

Alternativ hierzu könnte die Trennebene 23 auch schräg angeordnet sein und sich an der Ausrichtung der säbelartig gekrümmten Kontur 31 orientieren. Bei einer solchen Ausführung läge der Schneckenwindungsabschnitt S1 vollständige auf der ersten Seite 24 der Trennebene 23 und der Schneckenwindungsabschnitt S2 vollständig auf der zweiten Seite 25.

In den Figuren 9 und 10 sowie in den nachfolgend beschriebenen Figuren 11 bis 16 sind die jeweiligen Antriebsvorrichtungen 17 nicht dargestellt. Die in den Figuren 9 bis 16 dargestellten vertikalen Mischschnecken 15 werden jedoch vorzugsweise ebenfalls mit Planetengetriebe 22 angetrieben. Insofern gelten die im Hinblick auf die erste und zweite Ausführungsform (Figuren 3 bis 6 sowie 7 bis 9) gemachten Ausführungen analog. Vereinfacht gesagt sind alle Ausführungsformen mit einem gleichläufigen oder einem gegenläufigen Antrieb ausrüstbar.

Die Figuren 11 bis 13 zeigen eine vertikale Mischschnecke 15 in einer vierten Ausführungsform mit gegenläufigem Antrieb. Im Unterschied zu den Ausführungsformen eins bis drei durchbricht der Schneckenwindungsabschnitt S1 die Trennebene 23 und ragt mit einer Verlängerung 32 in den Bereich der zweiten Seite 25 hinein. Um bei Rotation der Schneckenwindungsabschnitte S1 und S2 mit unterschiedlichen Drehzahlen n1 und n2 eine Kollision zu vermeiden, ist die Verlängerung 32 seelenlos und überragt den Schneckenwindungsabschnitt S2 zur Seite hin. Durch die Verlängerung 32 ergibt sich in vertikaler Richtung gesehen somit ein Überlappungsbereich 33. In diesem Überlappungsbereich 33 wirkt in einem zentrumsnah zur Drehachse 14 angeordneten Innenbereich der Schneckenwindungsabschnitt S2 und in einem zentrumsfern zur Drehachse 14 angeordneten Außenbereich die Verlängerung 32 des Schneckenwindungsabschnitts S1.

Analog zur beschriebenen Ausführungsform wäre grundsätzlich auch ein Hineinragen einer am Schneckenwindungsabschnitt S2 vorgesehenen Verlängerung in einen Bereich auf die erste Seite 24 der Trennebene 23 oder eine wechselseitige Überlappung möglich. Dabei sind die seelenlosen Verlängerungen so zu gestalten, dass bei Rotation der Schneckenwindungsabschnitte S1 und S2 mit unterschiedlichen Drehzahlen n1 und n2 Kollisionen ausgeschlossen werden.

Unabhängig davon, wie der Überlappungsbereich gestaltet ist, ergibt sich durch die Überlappung der Schneckenwindungsabschnitte S1 und S2 eine besonders intensive und schnelle Durchmischung der Futterkomponenten.

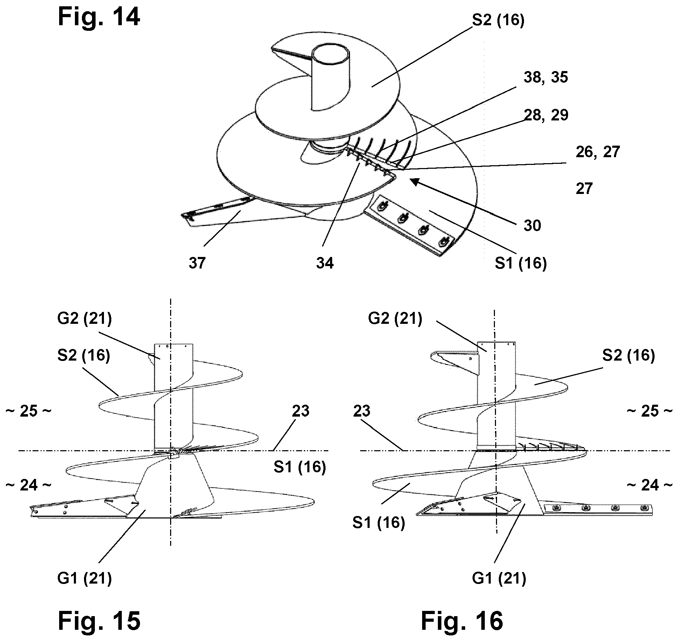

Die Figuren 14 bis 16 zeigen eine vertikale Mischschnecke 15 in einer fünften Ausführungsform. Diese fünfte Ausführungsform hat im dargestellten Ausführungsbeispiel einen gegenläufigen Antrieb und weist zusätzliche Schneidwerkzeuge 34 in Form von Schneidklingen auf. Im dargestellten Ausführungsbeispiel sind fünf Schneidklingen im Bereich des Endabschnitts 26 vertikal auf dem Schneckenwindungsabschnitt S1 angebracht. Die Schneidwerkzeige 34 wirken zusammen mit Gegenschneiden 35, welche durch Schlitze 38 ausgebildet werden, die in den Endabschnitt 28 des Schneckenwindungsabschnitts S2 eingebracht sind. Die zusätzlichen Schneidwerkezuge 34 und Gegenschneiden 35 zerteilen im Übergangsbereich zwischen den Schneckenwindungsabschnitten S1 und S2 befindliches Futter und tragen so dazu bei die Vermusungsgefahr zu reduzieren und die Struktur des Futters zu erhalten. Darüber hinaus reduzieren sie die Gefahr, dass Futter zwischen den Schneckenwindungsabschnitten eingeklemmt wird und aus dem Einander-Überstreichen der Endabschnitte 26 und 28 inakzeptabel hohe Lastspitzen auftreten.

Die beschriebenen fünf Ausführungsbeispiele geben nur einige der vielen realisierbaren Variationsmöglichkeiten wieder. Insbesondere sind alle technisch sinnvollen Kombinationen folgender Varianten möglich:
- unterschiedliche Antriebsformen (gleichläufig, gegenläufig) mit unterschiedlichen Antriebsvorrichtungen (Planetengetriebe, Einzelantriebe),
- unterschiedliche Gestaltungen der Schneckenwindungsabschnitte S1 und S2 (mit Überlappungsbereich, ohne Überlappungsbereich),
- unterschiedliche Gestaltungen der Endabschnitte 26 und 28 bzw. der Schneidkanten 27 und 29 (linear, gekrümmt, gezackt etc.),
- unterschiedliche Arten und Anbringung von zusätzlichen Schneidwerkzeugen 34 und Gegenschneiden 35.

Allen erfindungsgemäßen Ausführungen gemeinsam ist, dass ein Mischorgan 13 wenigstens zwei Schneckenwindungsabschnitte S1 und S2 umfasst, die jeweils einzeln antreibbar sind.

### Bezugszeichenliste

- 10: Mischbehälter
- 10': Mischbehälter
- 11: Einfüllöffnung
- 12: Ausgabeöffnung
- 13: Mischorgan
- 14: Drehachse (von 13 bzw. 15)
- 15: Mischschnecke
- 16: Schneckenwindung
- 17: Antriebsvorrichtung
- 18: erster Einzelantrieb
- 19: zweiter Einzelantrieb
- 20: Fahrwerk
- 21: Gehäuse
- 22: Planetengetriebe
- 23: Trennebene
- 24: erste Seite (von 23)
- 25: zweite Seite (von 23)
- 26: Endabschnitt (von S1)
- 27: Schneidkante (an 26)
- 28: Endabschnitt (von S2)
- 29: Schneidkante (an 28)
- 30: V-förmige Formation
- 31: gekrümmte Kontur
- 32: Verlängerung (an S1 und/oder S2)
- 33: Überlappungsbereich (von S1 und S2)
- 34: Schneidwerkzeug
- 35: Gegenschneide
- 36: Entnahmevorrichtung
- 37: Räumarm
- 38: Schlitz (in 28)
- 39: Anhängevorrichtung
- 40: Schneckenrohr
- 41: Schneckenrohr
- 42: Sonnenrad
- 43: Planetenträger
- 44: Planetenräder
- 45: Hohlrad (Planetenstufe 2)
- 46: Hohlrad (Planetenstufe 1)
- 100: Mischvorrichtung (Vertikalmischer)
- 100': Mischvorrichtung (Horizontalmischer)
- G1: Gehäuseabschnitt
- G2: Gehäuseabschnitt
- n1: Drehzahl (von S1)
- n2: Drehzahl (von S2)
- S1: erster Schneckenwindungsabschnitt
- S2: zweiter Schneckenwindungsabschnitt
- R1: Drehrichtung (im Uhrzeigersinn)
- R2: Drehrichtung (entgegengesetzt zum Uhrzeigersinn)

## Patentansprüche

1. Mischvorrichtung (100), insbesondere Futtermischer, umfassend
- einen Mischbehälter (10) mit einer Einfüllöffnung (11) und einer Ausgabeöffnung (12)
- wenigstens ein im Mischbehälter (10) angeordnetes und um eine vertikale Drehachse (14) drehbares Mischorgan (13) wie eine Mischschnecke (15),
- eine Antriebsvorrichtung (17) zum Antrieb des Mischorgans (13)
**dadurch gekennzeichnet, dass** wenigstens ein Mischorgan (13)
- eine einfach oder mehrfach geteilte Schneckenwindung (16) mit wenigstens zwei Schneckenwindungsabschnitten (S1, S2) umfasst und
- die Antriebsvorrichtung (17) einen ersten Einzelantrieb (18) für den ersten Schneckenwindungsabschnitt (S1) und einen zweiten Einzelantrieb (19) für den zweiten Schneckenwindungsabschnitt (S2) oder ein Antriebsgetriebe, bei dem sich die Antriebselemente für beide Schneckenwindungsabschnitte (S1, S2) um dieselbe geometrische Achse drehen, umfasst,
so dass der erste Schneckenwindungsabschnitt (S1) mit einer ersten Drehzahl (n1) und der zweite Schneckenwindungsabschnitt (S2) mit einer zweiten Drehzahl (n2) abhängig oder unabhängig vom jeweils anderen Schneckenwindungsabschnitt (S1, S2) gleichlaufend oder gegenläufig antreibbar ist.

2. Mischvorrichtung (100) nach Anspruch 1, **dadurch gekennzeichnet, dass** der erste Schneckenwindungsabschnitt (S1) und der zweite Schneckenwindungsabschnitt (S2) gleichläufig in Drehrichtung (R1) oder in gegenläufiger Drehrichtung (R2) antreibbar sind.

3. Mischvorrichtung (100) nach Anspruch 1, **dadurch gekennzeichnet, dass**:
- der erste Schneckenwindungsabschnitt (S1) in der Drehrichtung (R1) und der zweite Schneckenwindungsabschnitt (S2) in der Drehrichtung (R2)
- oder umgekehrt der erste Schneckenwindungsabschnitt (S1) in der Drehrichtung (R2) und der zweite Schneckenwindungsabschnitt (S2) in der Drehrichtung (R1)
gegenläufig antreibbar sind.

4. Mischvorrichtung (100) nach einem der Ansprüche 1 bis 3, **dadurch gekennzeichnet, dass** die Drehzahl (n1) des ersten Schneckenwindungsabschnitts (S1) und/oder die Drehzahl (n2) des zweiten Schneckenwindungsabschnitts (S2) verstellbar sind.

5. Mischvorrichtung (100) nach einem der Ansprüche 1 bis 4, **dadurch gekennzeichnet, dass** das Mischorgan (13)
- ein rohrartiges Gehäuse (21) mit einem ersten Gehäuseabschnitt (G1) und einem zweiten Gehäuseabschnitt (G2) umfasst,
- der erste Schneckenwindungsabschnitt (S1) auf dem ersten Gehäuseabschnitt (G1) und der zweite Schneckenwindungsabschnitt (S2) auf dem zweiten Gehäuseabschnitt (G2) angebracht ist und
- die Antriebsvorrichtung (17) wenigstens teilweise innerhalb des Gehäuses (21) angeordnet ist.

6. Mischvorrichtung (100) nach einem der Ansprüche 1 bis 5, **dadurch gekennzeichnet, dass** die Antriebsvorrichtung (17) wenigstens ein Planetengetriebe (22) umfasst.

7. Mischvorrichtung (100) nach Anspruch 6, **dadurch gekennzeichnet, dass** das Planetengetriebe (22) einen Steg, ein Hohlrad und ein Sonnenrad umfasst und entweder der Steg oder das Hohlrad oder das Sonnenrad fixiert ist und die beiden nicht fixierten Einheiten jeweils einen Einzelantrieb für den ersten und den zweiten Schneckenwindungsabschnitt (S1, S2) ausbilden.

8. Mischvorrichtung (100) nach einem der Ansprüche 1 bis 7, **dadurch gekennzeichnet, dass** die Schneckenwindungsabschnitte (S1, S2) durch eine Trennebene (23) voneinander getrennt sind und der erste Schneckenwindungsabschnitt (S1) auf einer ersten Seite (24) der Trennebene (23) und der zweite Schneckenwindungsabschnitt (S2) auf der zweiten Seite (25) der Trennebene (23) angeordnet ist.

9. Mischvorrichtung (100) nach Anspruch 8, **dadurch gekennzeichnet, dass** die Trennebene (23) in einem Winkel von 90° zur Drehachse (14) des Mischorgans (13) angeordnet ist.

10. Mischvorrichtung (100) nach einem der Ansprüche 8 oder 9, **dadurch gekennzeichnet, dass** der Einzelantrieb (18) des ersten Schneckenwindungsabschnitts (S1) auf der ersten Seite (24) der Trennebene (23) und der Einzelantrieb (19) des zweiten Schneckenwindungsabschnitts (S2) auf der zweiten Seite (25) der Trennebene (23) angeordnet ist.

11. Mischvorrichtung (100) nach einem der Ansprüche 8 bis 10, **dadurch gekennzeichnet, dass**
- der erste Schneckenwindungsabschnitt (S1) einen von der ersten Seite (24) an die Trennebene (23) heranreichenden Endabschnitt (26) mit einer Schneidkante (27) aufweist und/oder
- der zweite Schneckenwindungsabschnitt (S2) einen von der zweiten Seite (25) an die Trennebene (23) heranreichenden Endabschnitt (28) mit einer Schneidkante (29) aufweist.

12. Mischvorrichtung (100) nach Anspruch 11, **dadurch gekennzeichnet, dass** die Schneidkanten (27, 29) bei Rotation der Schneckenwindungsabschnitte (S1, S2) mit unterschiedlichen Drehzahlen (n1, n2) bei ihrem Zusammentreffen eine V-förmige Formation (30) ausbilden, so dass bei Fortsetzen der Rotationsbewegung zwischen den Schneidkanten (27, 29) befindliches Material durch einen Scherschnitt getrennt wird.

13. Mischvorrichtung (100) nach Anspruch 11 oder 12, **dadurch gekennzeichnet, dass** eine oder beide Schneidkanten (27, 29) linear ausgebildet sind oder eine gekrümmte, säbelartige Kontur (31) aufweisen.

14. Mischvorrichtung (100) nach einem der Ansprüche 8 bis 13, **dadurch gekennzeichnet, dass** an wenigstens einem der Schneckenwindungsabschnitte (S1, S2) eine die Trennebene (23) durchbrechende Verlängerung (32) angeschlossen ist, so dass zwischen den Schneckenwindungsabschnitten (S1, S2) ein Überlappungsbereich (33) ausgebildet ist.

15. Mischvorrichtung (100) nach einem der Ansprüche 1 bis 14, **dadurch gekennzeichnet, dass** an einem Schneckenwindungsabschnitt (S1) oder (S2) Schneidwerkzeuge (34) und am anderen Schneckenwindungsabschnitt (S1) oder (S2) Gegenschneiden (35) angebracht sind, welche bei Rotation der Schneckenwindungsabschnitte (S1, S2) mit unterschiedlichen Drehzahlen (n1, n2) scherend aneinander vorbeiführbar sind, so dass zwischen Schneidwerkzeug (34) und Gegenschneide (35) befindliches Material geschnitten wird.

## Claims

1. Mixing device (100), in particular feed mixer, comprising
- a mixing container (10) with a filling opening (11) and an outlet opening (12)
- at least one mixing organ (13) arranged in the mixing container (10) and rotatable about a vertical axis of rotation (14), such as a mixing screw (15),
- a drive unit (17) for driving the mixing organ (13)
**characterised in that** at least one mixing organ (13)
- comprises a single or multiple divided screw winding (16) with at least two screw winding sections (S1, S2) and
- the drive unit (17) comprises a first individual drive (18) for the first screw winding section (S1) and a second individual drive (19) for the second screw winding section (S2) or a drive gear in which the drive elements for both screw winding sections (S1, S2) rotate about the same geometric vehicle axle,
so that the first screw winding section (S1) can be driven at a first speed of rotation (n1) and the second screw winding section (S2) can be driven at a second speed of rotation (n2) in a dependent or independent manner relative to the other screw winding section (S1, S2), either in the same direction or in opposite directions.

2. Mixing device (100) according to claim 1, **characterised in that** the first screw winding section (S1) and the second screw winding section (S2) can be driven in the same direction of rotation (R1) or in opposite directions of rotation (R2).

3. Mixing device (100) according to claim 1, **characterised in that**:
- the first screw winding section (S1) in the direction of rotation (R1) and the second screw winding section (S2) in the direction of rotation (R2)
- or vice versa, the first screw winding section (S1) in the direction of rotation (R2) and the second screw winding section (S2) in the direction of rotation (R1)
can be driven in opposite directions.

4. Mixing device (100) according to one of claims 1 to 3, **characterised in that** the speed of rotation (n1) of the first screw winding section (S1) and/or the speed of rotation (n2) of the second screw winding section (S2) are adjustable.

5. Mixing device (100) according to one of claims 1 to 4, **characterised in that** the mixing organ (13)
- comprises a tubular housing (21) with a first housing section (G1) and a second housing section (G2),
- the first screw winding section (S1) is mounted on the first housing section (G1) and the second screw winding section (S2) is mounted on the second housing section (G2), and
- the drive unit (17) is arranged at least partially within the housing (21).

6. Mixing device (100) according to any of claims 1 to 5, **characterised in that** the drive unit (17) comprises at least one planetary gear (22).

7. Mixing device (100) according to claim 6, **characterised in that** the planetary gear (22) comprises a web, a ring gear and a sun gear, and either the web or the ring gear or the sun gear is fixed and the two non-fixed units each form an individual drive for the first and second screw winding sections (S1, S2).

8. Mixing device (100) according to one of claims 1 to 7, **characterised in that** the screw winding sections (S1, S2) are separated from each other by a separation level (23) and the first screw winding section (S1) is arranged on a first side (24) of the separation level (23) and the second screw winding section (S2) is arranged on the second side (25) of the separation level (23).

9. Mixing device (100) according to claim 8, **characterised in that** the separation level (23) is arranged at an angle of 90° to the axis of rotation (14) of the mixing organ (13).

10. Mixing device (100) according to one of claims 8 or 9, **characterised in that** the individual drive (18) of the first screw winding section (S1) is arranged on the first side (24) of the separation level (23) and the individual drive (19) of the second screw winding section (S2) is arranged on the second side (25) of the separation level (23).

11. Mixing device (100) according to one of claims 8 to 10, **characterised in that**
- the first screw winding section (S1) has an end section (26) extending from the first side (24) to the separation level (23) with a cutting edge (27) and/or
- the second screw winding section (S2) has an end section (28) extending from the second side (25) to the separation level (23) and having a cutting edge (29).

12. Mixing device (100) according to claim 11, **characterised in that** the cutting edges (27, 29) form a V-shaped formation (30) with different rotational speeds (n1, n2) when the screw winding sections (S1, S2) at different speeds of rotation (n1, n2) form a V-shaped formation (30) when they meet, so that when the rotational movement continues, material located between the cutting edges (27, 29) is separated by a shear cut.

13. Mixing device (100) according to claim 11 or 12, **characterised in that** one or both cutting edges (27, 29) are linear or have a curved, sabre-like contour (31).

14. Mixing device (100) according to one of claims 8 to 13, **characterised in that** at least one of the screw winding sections (S1, S2) is connected to an extension (32) which breaks through the separation level (23), so that an overlap area (33) is formed between the screw winding sections (S1, S2).

15. Mixing device (100) according to one of claims 1 to 14, **characterised in that** cutting tools (34) are attached to one screw winding section (S1) or (S2) and counter blades (35) are attached to the other screw winding section (S1) or (S2), which, when the screw winding sections (S1, S2) rotate at different speeds of rotation (n1, n2), can pass each other in a shearing manner, so that material located between the cutting tool (34) and the counter blade (35) is cut.

## Revendications

1. Dispositif de mélange (100), en particulier mélangeur de nourriture, comprenant
- un récipient mélangeur (10) avec une ouverture de remplissage (11) et une ouverture de sortie (12)
- au moins un organe de mélange (13) disposé dans le récipient mélangeur (10) et pouvant tourner autour d'un axe de rotation vertical (14), tel qu'une vis mélangeuse (15),
- un dispositif de propulsion (17) pour entraîner l'organe de mélange (13)
**caractérisé en ce que** au moins un organe de mélange (13)
- une vis sans fin (16) divisée une ou plusieurs fois avec au moins deux sections de vis sans fin (S1, S2) et
- le dispositif de propulsion (17) comprend un premier entraînement individuel (18) pour la première section de vis sans fin (S1) et un deuxième entraînement individuel (19) pour la deuxième section de vis sans fin (S2) ou un mécanisme d'entraînement dans lequel les éléments d'entraînement pour les deux sections de vis sans fin (S1, S2) tournent autour du même axe géométrique,
de sorte que la première section de vis sans fin (S1) peut être entraînée à une première vitesse de rotation (n1) et la deuxième section de vis sans fin (S2) à une deuxième vitesse de rotation (n2) de manière synchrone ou asynchrone, indépendamment de l'autre section de vis sans fin (S1, S2).

2. Dispositif de mélange (100) selon la revendication 1, **caractérisé en ce que** la première section de vis sans fin (S1) et la deuxième section de vis sans fin (S2) peuvent être entraînées dans le même sens de rotation (R1) ou dans des sens de rotation opposés (R2).

3. Dispositif de mélange (100) selon la revendication 1, **caractérisé en ce que** :
- la première section de vis sans fin (S1) dans le sens de rotation (R1) et la deuxième section de vis sans fin (S2) dans le sens de rotation (R2)
- ou inversement, la première section de vis sans fin (S1) dans le sens de rotation (R2) et la deuxième section de vis sans fin (S2) dans le sens de rotation (R1)
peuvent être entraînées en sens inverse.

4. Dispositif de mélange (100) selon l'une des revendications 1 à 3, **caractérisé en ce que** la vitesse de rotation (n1) de la première section de vis sans fin (S1) et/ou la vitesse de rotation (n2) de la deuxième section de vis sans fin (S2) sont réglables.

5. Dispositif de mélange (100) selon l'une des revendications 1 à 4, **caractérisé en ce que** l'organe de mélange (13)
- comprend un boîtier tubulaire (21) avec une première partie de boîtier (G1) et une deuxième partie de boîtier (G2),
- la première section de vis sans fin (S1) est montée sur la première section de boîtier (G1) et la deuxième section de vis sans fin (S2) est montée sur la deuxième section de boîtier (G2) et
- le dispositif de propulsion (17) est disposé au moins en partie à l'intérieur du boîtier (21).

6. Dispositif de mélange (100) selon l'une des revendications 1 à 5, **caractérisé en ce que** le dispositif de propulsion (17) comprend au moins un train épicycloïdal (22).

7. Dispositif de mélange (100) selon la revendication 6, **caractérisé en ce que** le train épicycloïdal (22) comprend une entretoise, une couronne dentée et un pignon solaire, et soit l'entretoise, soit la couronne dentée, soit le pignon solaire est fixe, et les deux unités non fixes forment chacune un entraînement individuel pour la première et la deuxième section de vis sans fin (S1, S2).

8. Dispositif de mélange (100) selon l'une des revendications 1 à 7, **caractérisé en ce que** les sections de vis sans fin (S1, S2) sont séparées l'une de l'autre par un plan de séparation (23) et la première section de vis sans fin (S1) est disposée sur un premier côté (24) du plan de séparation (23) et la deuxième section de vis sans fin (S2) est disposée sur le deuxième côté (25) du plan de séparation (23).

9. Dispositif de mélange (100) selon la revendication 8, **caractérisé en ce que** le plan de séparation (23) est disposé à un angle de 90° par rapport à l'axe de rotation (14) de l'organe de mélange (13).

10. Dispositif de mélange (100) selon l'une des revendications 8 ou 9, **caractérisé en ce que** l'entraînement individuel (18) de la première section de vis sans fin (S1) est disposé sur le premier côté (24) du plan de séparation (23) et l'entraînement individuel (19) de la deuxième section de vis sans fin (S2) est disposé sur le deuxième côté (25) du plan de séparation (23).

11. Dispositif de mélange (100) selon l'une des revendications 8 à 10, **caractérisé en ce que**
- la première section de vis sans fin (S1) présente une section finale (26) s'étendant depuis le premier côté (24) jusqu'au plan de séparation (23) avec un tranchant (27) et/ou
- la deuxième section de vis sans fin (S2) présente une section finale (28) s'étendant depuis le deuxième côté (25) jusqu'au plan de séparation (23) avec un tranchant (29).

12. Dispositif de mélange (100) selon la revendication 11, **caractérisé en ce que** les tranchants (27, 29) forment, lors de la rotation des sections de vis sans fin (S1, S2) à des vitesses de rotation différentes (n1, n2) lors de leur rencontre, elles forment une formation en V (30), de sorte que, lors de la poursuite du mouvement de rotation, le matériau situé entre les tranchants (27, 29) est séparé par une coupe de cisaillement.

13. Dispositif de mélange (100) selon la revendication 11 ou 12, **caractérisé en ce que** l'un ou les deux tranchants (27, 29) sont linéaires ou présentent un contour incurvé en forme de sabre (31).

14. Dispositif de mélange (100) selon l'une des revendications 8 à 13, **caractérisé en ce que** sur au moins l'une des sections de vis sans fin (S1, S2) est raccordée une prolongation (32) qui traverse le plan de séparation (23), de sorte qu'une zone de chevauchement (33) est formée entre les sections de vis sans fin (S1, S2).

15. Dispositif de mélange (100) selon l'une des revendications 1 à 14, **caractérisé en ce que** des outils de coupe (34) sont montés sur une section de vis sans fin (S1) ou (S2) et des contre-couteaux (35) sont montés sur l'autre section de vis sans fin (S1) ou (S2) qui, lors de la rotation des sections de vis sans fin (S1, S2) à des vitesses de rotation différentes (n1, n2), peuvent passer les uns devant les autres en cisaillement, de sorte que le matériau se trouvant entre l'outil de coupe (34) et le contre-couteau (35) est coupé.
